# EUROPÄISCHE PATENTSCHRIFT

(11) **EP 2 487 345 B1**
(45) Veröffentlichungstag und Bekanntmachung des Hinweises auf die Patenterteilung: **16.08.2017**
(21) Anmeldenummer: 12154031.4
(22) Anmeldetag: 06.02.2012
(51) Int. Cl.: F01N 3/20, F16K 31/10, F16K 31/06, F16K 11/04

(54) **Harnstoffeinspritzsystem und Ventilanordnung hierfür**
Urea injection system and valve assembly for same
Système d'injection d'urée et agencement de soupape associé

(30) Priorität: 09.02.2011 DE 102011010784
(43) Veröffentlichungstag der Anmeldung: 15.08.2012
(73) Patentinhaber: Prettl, Rolf, 72072 Tübingen (DE)
(72) Erfinder: Grotz, Michael, 72762 Reutlingen (DE); Maier, Frank, 72764 Reutlingen (DE); Biechele, Günter, 88299 Leutkirch (DE)
(74) Vertreter: Witte, Weller & Partner Patentanwälte mbB

(56) Entgegenhaltungen:
- EP-A1- 2 206 897
- DE-A1- 3 501 708
- DE-A1-102006 060 838
- DE-A1-102008 039 420
- US-A1- 2008 148 716

## Beschreibung

Die vorliegende Erfindung betrifft eine Ventilanordnung für aggressive Fluide, insbesondere für Harnstoff, mit einer Wegeventileinrichtung, die eine erste und eine zweite Schaltstellung aufweist, und einer Aktoreinrichtung zur Betätigung der Wegeventileinrichtung, wobei die Wegeventileinrichtung wenigstens einen Tankanschluss zur Verbindung mit einem Tank, wenigstens einen Pumpanschluss zur Verbindung mit einer Pumpe sowie einen Arbeitsanschluss aufweist, , wobei die Wegeventileinrichtung nach dem Versetzen in die erste Schaltstellung mittels der Aktoreinrichtung durch eine fluidische Selbsthalteeinrichtung in der ersten Schaltstellung gehalten wird, wie es aus dem Dokument DE 10 2008 039 420 A1 bekannt ist.

Ferner betrifft die vorliegende Erfindung ein Harnstoffeinspritzsystem für Kraftfahrzeuge sowie ein Verfahren zum Ansteuern einer Ventilanordnung für Harnstoffeinspritzsysteme.

Harnstoffeinspritzsysteme sind generell bekannt. Mit derartigen Systemen wird generell eine Ammoniak enthaltende Harnstofflösung in den Abgasstrang eines Verbrennungsmotors (Dieselmotors) eingespritzt, was zu einer Reduktion der Stickoxide führt (so genannte DNox-Reaktion).

Die hierbei verwendete Harnstofflösung ist ein Fluid, das für den geplanten Einsatzzweck zwei Nachteile aufweist. Zum einen liegt der Gefrierpunkt relativ niedrig, so dass es notwendig ist, das Harnstoffeinspritzsystem nach Gebrauch in einen Tank zu entleeren, um ein Bersten der Zuleitungen etc. zu verhindern. Zum anderen ist die Harnstofflösung chemisch vergleichsweise aggressiv.

In der Praxis werden zum Sperren bzw. Öffnen eines Fluidweges in dem Harnstoffeinspritzsystem Ventilanordnungen verwendet, die als Wegeventileinrichtung ausgebildet sind, die zwischen zwei Schaltstellungen versetzbar ist. In der einen Schaltstellung wird dabei Harnstofflösung aus einem Tank mittels einer Pumpe einer Harnstoffeinspritzdüse zugeführt. In der anderen Schaltstellung wird mittels derselben Pumpe (vorzugsweise in der gleichen Drehrichtung) die Harnstofflösung aus dem Einspritztrakt zurück in den Tank gepumpt. Eine der zwei Schaltstellungen wird aufgrund einer elastischen Vorspannung der Wegeventileinrichtung erzielt. In der anderen Schaltstellung ist ein Aktuator zu bestromen, der vorzugsweise als Elektromagnetaktuator ausgebildet ist (siehe z.B. DE 10 2006 003 987 A1).

Generell besteht ein Bestreben danach, den Wirkungsgrad derartiger Harnstoffeinspritzsysteme zu verbessern. Es ist demzufolge eine Aufgabe der Erfindung, eine derart verbesserte Ventilanordnung bzw. ein derart verbessertes Harnstoffeinspritzsystem und ein zugeordnetes Verfahren zum Ansteuern einer Ventilanordnung für ein Harnstoffeinspritzsystem anzugeben.

Die obige Aufgabe wird durch eine Ventilanordnung gemäß Anspruch 1 gelöst, wobei die Wegeventileinrichtung in die zweite Schaltstellung vorgespannt ist, wobei die Selbsthalteeinrichtung in der ersten Schaltstellung über eine Drossel mit einem Tankrücklauf verbunden ist.

Die obige Aufgabe wird ferner gelöst durch ein Harnstoffeinspritzsystem für Kraftfahrzeuge, mit einem Einspritzsystem, das mit einem Arbeitsanschluss einer erfindungsgemäßen Ventilanordnung verbunden ist.

Ferner wird die obige Aufgabe gemäß dem ersten Aspekt der Erfindung gelöst durch ein Verfahren gemäß Anspruch 12, zum Ansteuern einer Ventilanordnung für Harnstoffeinspritzsysteme, insbesondere einer Ventilanordnung der oben beschriebenen Art, mit den Schritten, eine Aktoreinrichtung zu betätigen, um eine Wegeventileinrichtung der Ventilanordnung aus einer zweiten in eine erste Schaltstellung zu versetzen, wobei die Wegeventileinrichtung in der ersten Schaltstellung mittels einer fluidischen Selbsthalteeinrichtung gehalten wird, die in der ersten Schaltstellung mit einem Arbeitsanschluss verbunden ist, der mit der Druckseite einer Fluidversorgungseinrichtung verbunden ist, wobei die Selbsthalteeinrichtung in der ersten Schaltstellung über eine Drossel mit einem Tankrücklauf verbunden ist und mit dem Schritt, die Aktoreinrichtung zu deaktivieren.

Bei der erfindungsgemäßen Ventilanordnung ist es möglich, die Wegeventileinrichtung ohne ständige Energiezufuhr in der ersten Schaltstellung zu halten. Es ist lediglich notwendig, die Aktoreinrichtung kurz mit Energie zu versorgen, um die Wegeventileinrichtung in die erste Schaltstellung zu versetzen. Sobald die fluidische Selbsthalteeinrichtung Wirkung entfaltet, wird die Wegeventileinrichtung mittels dieser ohne weitere Energiezufuhr in der ersten Schaltstellung gehalten. Demzufolge hat die Ventilanordnung einen hohen Wirkungsgrad.

Ferner wird im Gegensatz zu mechanischen Selbsthalteeinrichtungen, wie Rasteinrichtungen oder dergleichen, eine hohe Funktionssicherheit erzielt. Durch eine fluidische Selbsthalteeinrichtung lassen sich zudem relativ hohe Kräfte realisieren, so dass zudem eine hohe Dichtheit der Ventilanordnung eingerichtet werden kann, da die hohen Kräfte dazu genutzt werden können, um geeignete Absperrorgane gegen Ventilsitze zu drücken.

Die zweite Schaltstellung, in die die Wegeventileinrichtung mechanisch oder magnetisch vorgespannt ist, beispielsweise mittels einer Feder und/oder mittels Permanentmagneten, ist vorzugsweise jene Schaltstellung, in der sich ein damit betriebenes Harnstoffeinspritzsystem in einer Entleerungs- bzw. Ruhestellung befindet. Die erste Schaltstellung ist hierbei vorzugsweise jene, in der ein mit einer solchen Ventilanordnung betriebenes Harnstoffeinspritzsystem Harnstoff hin zu einer Einspritzdüse fördert. Während dieser Betriebsart wird von einer Fluidfördereinrichtung wie einer Pumpe ständig ein Förderdruck bereitgestellt, der von der fluidischen Selbsthalteeinrichtung genutzt werden kann, um die Wegeventileinrichtung in der ersten Schaltstellung zu halten.

Die fluidische Selbsthalteeinrichtung kann auch dazu genutzt werden, beim Übergang von der zweiten in die erste Schaltstellung zu unterstützen, so dass die Aktoreinrichtung klein dimensioniert werden kann.

Erfindungsgemäß ist die Selbsthalteeinrichtung in der ersten Schaltstellung über eine Drossel mit einem Tankrücklaufanschluss verbunden.

Diese Verbindung kann wiederum entweder direkt erfolgen oder aber dadurch, dass sich die Wegeventileinrichtung in der ersten Schaltstellung befindet, also mittelbar über die Wegeventileinrichtung.

Durch die Verbindung der Selbsthalteeinrichtung mit einer Drossel, die in einen Tankrücklauf mündet, ist es auf vergleichsweise einfache Weise möglich, die Selbsthaltung wieder abzubauen, sobald von einer Fluidversorgungseinrichtung wie einer Pumpe nicht mehr hinreichend Druck zur Verfügung gestellt wird. In diesem Fall sinkt die von der fluidischen Selbsthalteeinrichtung ausgeübte Selbsthaltekraft dadurch, dass das darin befindliche Fluid über die Drossel zum Tankrücklauf strömt. Die Drossel dient dabei zur Entspannung und Entlüftung.

Hierdurch wird bei einer bevorzugten Ausführungsform des erfindungsgemäßen Verfahrens eine Deaktivierung der Selbsthalteeinrichtung möglich, indem die Fluidversorgungseinrichtung zum Versetzen der Wegeventileinrichtung zurück in die zweite Schaltstellung deaktiviert wird, wobei sich die Selbsthalteeinrichtung über eine in dieser Schaltstellung mit dem Arbeitsanschluss verbundene Drossel zum Tank hin entleert, bis die Wirkung der Selbsthaltung geringer ist als die Wirkung einer Rückstelleinrichtung, die die Aktoreinrichtung in die zweite Schaltstellung vorspannt.

Die Aufgabe wird somit vollkommen gelöst.

Erfindungsgemäß ist die Selbsthalteeinrichtung mit der Aktoreinrichtung verbunden.

Die Aktoreinrichtung ist vorzugsweise ein linear arbeitender Elektromagnet, so dass eine fluidische Selbsthalteeinrichtung auf relativ einfache Weise mit der Aktoreinrichtung verbunden werden kann, beispielsweise durch formschlüssige Anbindung an einen Anker bzw. eine Aktorstange der Aktoreinrichtung.

Bei dieser Ausführungsform kann eine Vorspannung der Wegeventileinrichtung vorzugsweise ebenfalls im Bereich der Aktoreinrichtung erfolgen, beispielsweise durch eine mechanische Rückstellfeder, die einen Anker der Aktoreinrichtung in die zweite Schaltstellung drückt.

Besonders bevorzugt ist es bei dieser Ausführungsform, wenn eine Aktorstange oder ein Anker mit einem Selbsthaltekolben eines Selbsthaltezylinders verbunden ist.

Hierdurch ist es auf einfache Weise möglich, eine Axialkraft auf die Aktorstange auszuüben, um diese, und damit die Wegeventileinrichtung, in die erste Schaltstellung zu versetzen.

Die erfindungsgemäße Ventilanordnung ist insbesondere für aggressive Fluide, wie beispielsweise Harnstoff, ausgelegt. Dabei kann die Ventilanordnung beispielsweise als hebelbetätigtes Klappenventil ausgebildet sein, oder auch als Linear- bzw. Tellerventil. In beiden Fällen ist auf eine geeignete Abdichtung von Bauteilen der Ventilanordnung zu achten, die durch das aggressive Fluid beeinträchtigt werden können. Im Falle eines Klappenventils ist beispielsweise der Hebel zur Betätigung der Klappe über eine geeignete, abdichtende Hebellagerung abzudichten, wie es beispielsweise in dem Dokument DE 10 2004 021 765 A1 beschrieben ist, auf dessen Offenbarungsgehalt vollständig Bezug genommen wird. Bei einem Tellerventil, das mittels eines Schiebers betätigt wird, ist darauf zu achten, dass das Fluid nicht in einen Führungs-bereich des Schiebers hinein gerät. Demzufolge sind Ventilkammern eines solchen Tellerventils durch geeignete Abdichtmaßnahmen abzudichten, beispielsweise durch sich mitbewegende Membrandichtungen.

Aus den oben genannten Gründen ist es ferner bevorzugt, wenn der Selbsthaltekolben über eine mit einem Zylindermantel des Selbsthaltezylinders verbundene Membran abgedichtet ist.

Gemäß einer alternativen Ausführungsform ist die Selbsthalteeinrichtung in die Wegeventileinrichtung integriert.

Diese Ausführungsform kann alternativ oder zusätzlich zu einer Selbsthalteeinrichtung vorgesehen sein, die mit der Aktoreinrichtung verbunden ist.

Bei einer in die Wegeventileinrichtung integrierten Selbsthalteeinrichtung können beispielsweise auf bewegliche Teile der Ventilanordnung wirkende unterschiedliche Drücke und/oder unterschiedliche Flächen für eine fluidische Selbsthaltung sorgen.

Erfindungsgemäß ist die Selbsthalteeinrichtung an der ersten Schaltstellung mit dem Arbeitsanschluss verbunden. Diese Verbindung kann unmittelbar eingerichtet werden oder aber dadurch, dass die Wegeventileinrichtung zunächst durch die Aktoreinrichtung in die erste Schaltstellung verbracht wird.

Bei den bislang in der Praxis verwendeten Wegeventileinrichtungen sind diese häufig als hebelbetätigte Klappenventile realisiert worden. Dabei war es üblich, zwei Klappen mittels eines gemeinsamen Hebels synchron zu betätigen. Aufgrund unterschiedlicher Druckverhältnisse an den Klappen war es bei dieser Art von Ventil bislang schwierig, Torsionen des Hebels zu vermeiden. Da der Hebel häufig in einer elastomeren Lagerung aufgenommen war, konnten derartige Torsionen zu Wirkungsgradverschlechterungen führen. Anders herum ausgedrückt war es bislang schwierig, den Hebel für eine solche Doppelklappe mit hinreichender Präzision zu führen.

Bei derartigen Doppelklappen, die in einer gemeinsamen Ventilkammer angeordnet waren, konnte sich zudem eine unterschiedliche Abnutzung ergeben, da durch die interne hydraulische Verschaltung die eine Ventilklappe häufig mit einem höheren Druck auf der Abdichtseite beaufschlagt wurde als die andere Ventilklappe.

Demzufolge ist es bei der erfindungsgemäßen Ventilanordnung von besonderem Vorzug, wenn die Wegeventileinrichtung zwei Ventilkammern aufweist, in denen jeweils ein Absperrorgan beweglich gelagert ist und die jeweils mit wenigstens einem Anschluss der Wegeventileinrichtung verbunden sind, wobei die Anschlüsse so gewählt sind, dass in einer der Ventilkammern unabhängig von der Schaltstellung ein höherer Druck vorherrscht als in der anderen Ventilkammer.

Hierdurch kann die Betätigung der Absperrorgane jeweils abgestimmt auf den in den Ventilkammern herrschenden Druck eingestellt werden. Da Absperrorgane dieser Art häufig durch Federn angedrückt werden, also kraftgesteuert angedrückt werden, kann bei Einrichtung der unterschiedlichen Ventilkammern mit unterschiedlichen Drücken die Betätigung der Absperrorgane jeweils in geeigneter Weise mit unterschiedlichen Kraftkennlinien (beispielsweise unterschiedlichen Federn) erfolgen. Mit anderen Worten können durch optimierte Ausnutzung der Systemdrücke des Fluids reduzierte Schaltkräfte realisiert werden. Auch kann die Toleranzabhängigkeit der Dichtbereiche minimiert werden.

Aus ähnlichen Erwägungen heraus ist es bei der erfindungsgemäßen Ventilanordnung von besonderem Vorteil, wenn die Wegeventileinrichtung als Klappenventil ausgebildet ist, das zwei über jeweilige Hebel betätigbare Ventilklappen aufweist, wobei die Hebel unabhängig voneinander gelagert sind.

Hierbei wird die Ausführungsform einer Doppelklappe vermieden, bei der der Hebel gegebenenfalls Torsionskräften unterliegen kann. Da bei dieser Ausführungsform die Hebel unabhängig voneinander gelagert sind, können derartige Torsionskräfte vermieden werden. Hierdurch kann die Lagerung der Hebel deutlich einfacher und mit den obigen Vorteilen realisiert werden.

Allerdings ist es auch bei dieser Ausführungsform von Vorteil, wenn die Ventilklappen mittels der Aktoreinrichtung synchron betätigbar sind.

Hierdurch kann die Funktion der Ventilklappen trotz ihrer Unabhängigkeit über eine einzelne Aktoreinrichtung realisiert werden.

Beispielsweise können die zwei Hebel der Ventilklappen an einer gemeinsamen Aktorstange eines Linearaktors wie eines Elektromagneten gelenkig festgelegt werden.

Ferner ist es insgesamt vorteilhaft, wenn die Wegeventileinrichtung durch zwei 3/2-Wegeventile gebildet ist, deren Arbeitsanschlüsse miteinander verbunden sind.

Diese Ausführungsform wird in Verbindung mit dem Oberbegriff des Anspruchs 1 ebenfalls als eigene Erfindung angesehen. Durch diese Ausführungsform kann die Funktion eines 5/2-Wegeventils realisiert werden. Bei dieser Ausführungsform ist es insbesondere möglich, einen Tanksauganschluss in der zweiten Schaltstellung sicher mit einem relativ hohen Dichtdruck abzudichten. Daher ist es generell sogar möglich, einen Tank relativ gesehen oberhalb der Ventilanordnung anzuordnen, da bei dieser Ausführungsform vermieden werden kann, dass aufgrund von Gravitationskräften Fluid während des Einrichtens der zweiten Schaltstellung in die Ventilanordnung strömt.

Wie oben beschrieben, werden für Ventilanordnungen, die für Harnstoffeinspritzsysteme verwendet werden, bislang im Wesentlichen Klappenventile verwendet, die mittels jeweiliger Hebel betätigbar sind.

Gemäß einer bevorzugten Ausführungsform der vorliegenden Erfindung weist die Wegeventileinrichtung wenigstens einen Ventilteller auf, der mittels eines axial verschieblichen Schiebers betätigbar ist (Linearventil).

Bei dieser Ausführungsform ist ein relativ schwer kontrollierbarer Hebel zur Betätigung der Wegeventileinrichtung nicht notwendig. Die Betätigung erfolgt rein axial, so dass eine direkte, hebelfreie Kopplung mit einer linear arbeitenden Aktoreinrichtung möglich ist.

Da die Ventilanordnung insbesondere für aggressive Fluide ausgelegt ist, ist es bei dieser Ausführungsform bevorzugt, wenn der axial verschiebliche Schieber gegenüber dem Gehäuse mittels einer beweglichen Membran abgedichtet ist. Hierdurch kann vermieden werden, dass das Fluid in den Bereich einer Schieberführung gelangt, also in einen Bereich, in dem gegenüber Korrosion anfällige Metalle verwendet werden. Ferner können die hierbei für eine exakte axiale Führung notwendigen feinen Zwischenräume durch Kristallisieren der Harnstoffmoleküle beschädigt werden. Durch eine derartige Membran kann jedoch eine hinreichende Abdichtung erfolgen.

Um eine Wegeventileinrichtung zu realisieren, die zwei Absperrorgane aufweist, ist es bevorzugt, wenn die Wegeventileinrichtung zwei Schieber aufweist.

Hierdurch kann jeder Ventilkammer ein eigener Schieber zugeordnet werden. Ferner ist es möglich, beide Schieber mittels einer einzelnen Aktoreinrichtung zu betätigen.

Dabei ist es bevorzugt, wenn die zwei Schieber über ein Zwischenglied miteinander gekoppelt sind, wobei die Aktoreinrichtung mit dem Zwischenglied gekoppelt ist. Hierdurch können die zwei Schieber mittels einer einzelnen Aktoreinrichtung betätigt werden.

Dabei ist es bevorzugt, wenn das Zwischenglied und wenigstens einer der Schieber in einer Verschieberichtung über einen Anschlag und in der anderen Verschieberichtung über eine Feder gekoppelt sind.

Hierbei kann in der einen Verschieberichtung eine im Wesentlichen formschlüssige Kopplung erfolgen. In der anderen Verschieberichtung kann die Aktorkraft hingegen über eine Feder auf das zugeordnete Absperrorgan wirken, so dass eine kraftgesteuerte Betätigung dieses Absperrorgans, wie eines Ventiltellers, möglich ist.

Ferner ist es vorteilhaft, wenn die zwei Schieber koaxial angeordnet sind.

Dies ermöglicht zum einen einen radial kompakten Bau.

Dabei ist es von besonderem Vorzug, wenn die Aktoreinrichtung eine Spule aufweist, die zwischen den Schiebern angeordnet ist.

Hierdurch kann der radial kompakte Aufbau beibehalten werden. Eine Betätigung über einen Hebel oder dergleichen ist hierbei nicht erforderlich.

Ferner ist es hierbei von besonderem Vorzug, wenn an wenigstens einem der Schieber ein Permanentmagnet festgelegt ist.

Durch diese Maßnahme kann die Aktoreinrichtung durch eine feststehende Spule gebildet werden, die bei Bestromung auf den Permanentmagneten einwirkt. Ein innerhalb der Spule beweglicher Anker ist hierbei nicht notwendig. Demzufolge kann die Spule auch in einer zwischen den Schiebern angeordneten Gehäuseausbuchtung angeordnet sein. Die Abdichtung der Ventilanordnung kann hierdurch erheblich vereinfacht werden.

Vorzugsweise weist jeder der Schieber einen Permanentmagneten auf, die in axialer Richtung gepolt sind. Dabei ist die Polung vorzugsweise umgekehrt, so dass sich die Permanentmagnete vorzugsweise in der zweiten Stellung wechselseitig anziehen, beispielsweise über ein starres Joch innerhalb der Spule. Die Vorspannung der Wegeventileinrichtung in die zweite Stellung wird bei dieser Ausführungsform folglich magnetisch realisiert.

Die Spule ist dabei vorzugsweise koaxial zu den Schiebern ausgerichtet, so dass bei Bestromung ein Feld aufgebaut wird, mittels dessen die unterschiedlich gepolten Permanentmagnete auf den axial gegenüberliegenden Seiten der Spule voneinander abgestoßen werden, um die erste Schaltstellung einzurichten.

Ferner ist es bei der Ausführungsform mit zwei Schiebern bevorzugt, wenn an jedem Schieber zwei Ventilteller festgelegt sind.

Hierdurch ist es möglich, die Systemdrücke besonders effizient auszunutzen, um eine in die Wegeventileinrichtung integrierte Selbsthalteeinrichtung zu realisieren.

In einer alternativen Ausführungsform weist die Wegeventileinrichtung einen einzelnen Schieber auf, an dem wenigstens zwei Absperrorgane gelagert sind, die in jeweiligen Ventilkammern angeordnet sind.

Hierdurch kann die Betätigung der Absperrorgane über den einzelnen Schieber erfolgen, wobei die Absperrorgane zumindest in einer Verschieberichtung wiederum über eine Feder mit dem einzelnen Schieber gekoppelt sein können.

Generell ist bei dieser Ausführungsform die Ankopplung der Aktoreinrichtung noch einfacher realisierbar, und auch die Anzahl der Bauteile verringert sich. Bei der erstgenannten Ausführungsform mit zwei Schiebern ist jedoch gegebenenfalls der Montageaufwand vereinfacht.

Bei der Ausführungsform mit einem einzelnen Schieber ist es bevorzugt, wenn die Fläche von einem Absperrorgan größer ist als die Fläche des anderen Absperrorgans, wobei die Flächendifferenz hinreichend groß ist, um die Selbsthalteeinrichtung zu bilden bzw. die Selbsthaltung zu unterstützen, mittels der die Wegeventileinrichtung in der ersten Schaltstellung gehalten wird.

Bei dieser Ausführungsform kann die Selbsthalteeinrichtung folglich in die Wegeventileinrichtung integriert werden oder kann eine mit einer Aktoreinrichtung verbundene Selbsthalteeinrichtung unterstützen.

Es versteht sich, dass bei der Berechnung der Selbsthaltekräfte nicht nur die jeweiligen Flächen relevant sind, auf die der Druck in den jeweiligen Ventilkammern wirkt, sondern auch die jeweiligen Druckbeträge.

Bei der Ausführungsform einer Wegeventileinrichtung mit einem oder mehreren Schiebern ist es ferner bevorzugt, wenn die Aktoreinrichtung koaxial zu wenigstens einem der Schieber angeordnet ist.

Hierdurch lässt sich eine radial kompakte Bauweise realisieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Harnstoffeinspritzsystems für Kraftfahrzeuge mit einer Ventilanordnung in einer ersten Schaltstellung;
- Fig. 2: die Ventilanordnung der Fig. 1 in einer zweiten Schaltstellung;
- Fig. 3: eine schematische Längsschnittansicht durch eine weitere Ausführungsform einer erfindungsgemäßen Ventilanordnung in einer ersten Schaltstellung;
- Fig. 4: eine schematische Längsschnittansicht durch eine weitere Ausführungsform einer erfindungsgemäßen Ventilanordnung in einer ersten Schaltstellung;
- Fig. 5: eine schematische Längsschnittansicht durch eine weitere Ausführungsform einer erfindungsgemäßen Ventilanordnung in einer ersten Schaltstellung;
- Fig. 6: eine schematische Längsschnittansicht durch eine weitere Form einer erfindungsgemäßen Ventilanordnung in der ersten Schaltstellung; und
- Fig. 7: die Ventilanordnung der Fig. 6 in der zweiten Schaltstellung.

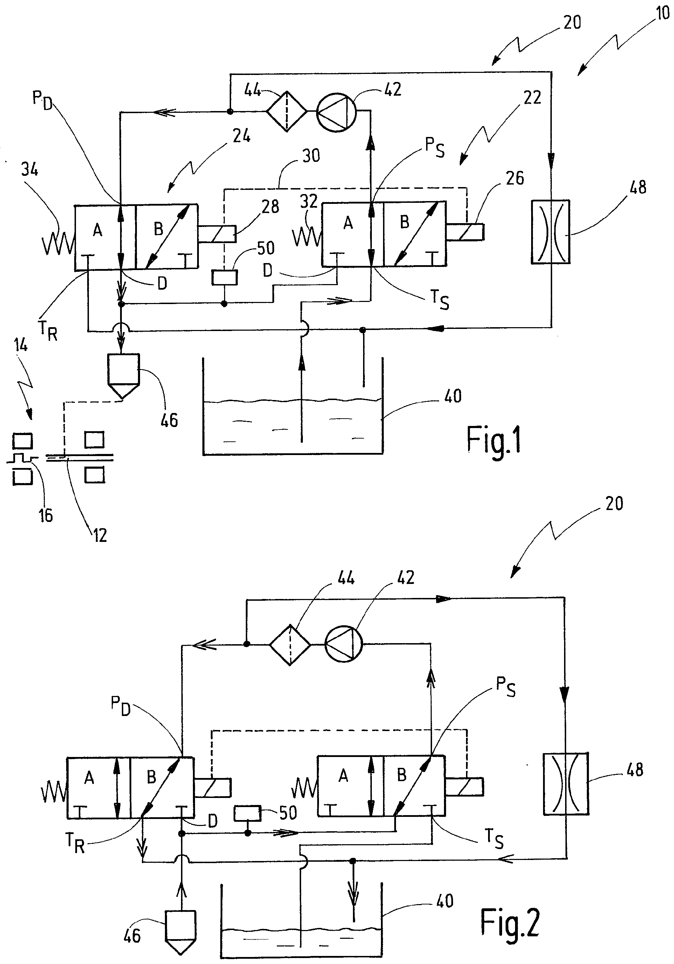

In den Fig. 1 und 2 ist eine erste Ausführungsform eines Harnstoffeinspritzsystems 10 mit einer erfindungsgemäßen Ventilanordnung gezeigt. Fig. 1 zeigt dabei eine erste Schaltstellung A und Fig. 2 eine zweite Schaltstellung B.

Das Harnstoffeinspritzsystem 10 dient dazu, in der ersten Schaltstellung Harnstoff in eine Abgasanlage 12 eines Fahrzeugs 14 einzuspritzen, das einen Verbrennungsmotor 16, insbesondere einen Dieselmotor, aufweist. In der zweiten Schaltstellung B kann Harnstoff aus dem Einspritzsystem abgesaugt werden, um zu vermeiden, dass der Harnstoff bei niedrigen Umgebungstemperaturen innerhalb des Einspritzsystems gefriert und durch die hiermit einhergehende Ausdehnung Schäden hervorruft.

Die Ventilanordnung weist eine Wegeventileinrichtung 20 auf, die durch ein erstes 3/2-Wegeventil 22 und ein zweites 3/2-Wegeventil 24 gebildet ist. Das erste 3/2-Wegeventil 22 ist mittels eines ersten elektromechanischen Aktors 26 in die erste Schaltstellung A betätigbar. Das zweite 3/2-Wegeventil 24 ist mittels eines zweiten elektromechanischen Aktors 28 in die erste Schaltstellung A betätigbar. Wie es durch gestrichelte Linien angedeutet ist, können der erste und der zweite Aktor 26, 28 durch einen gemeinsamen Aktor gebildet sein, der eine Aktoreinrichtung 30 bildet. Eine erste mechanische oder magnetische Rückstellfeder 32 dient dazu, bei nichtbetätigtem Aktor 26 das erste 3/2-Wegeventil 22 in die zweite Schaltstellung B zu versetzen. In entsprechender Weise dient eine zweite mechanische oder magnetische Rückstellfeder 34 dazu, das zweite 3/2-Wegeventil 24 in die zweite Schaltstellung B zu versetzen. Auch die Rückstellfedern 32, 34 können durch eine einzelne Rückstellfeder gebildet sein, die beispielsweise an der Aktoreinrichtung 30 angreift.

Das erste 3/2-Wegeventil 22 weist einen Arbeitsanschluss D, einen Tanksauganschluss T_{S} sowie einen Pumpsauganschluss P_{S} auf. Das zweite 3/2-Wegeventil 24 weist einen Arbeitsanschluss D, einen Pumpdruckanschluss P_{D} sowie einen Tankrücklaufanschluss T_{R} auf.

In der ersten Schaltstellung A (Fig. 1) sind der Tanksauganschluss T_{S} und der Pumpsauganschluss P_{S} miteinander verbunden, und der Arbeitsanschluss D des ersten 3/2-Wegeventils 22 ist gesperrt. Ferner sind in dem zweiten 3/2-Wegeventil 24 der Arbeitsanschluss D und der Pumpdruckanschluss P_{D} miteinander verbunden, und der Tankrücklaufanschluss T_{R} ist gesperrt.

In der zweiten Schaltstellung B (Fig. 2) sind in dem ersten 3/2-Wegeventil 22 der Arbeitsanschluss D und der Pumpsauganschluss P_{S} miteinander verbunden, und der Tanksauganschluss T_{S} ist gesperrt. In der zweiten Schaltstellung B sind bei dem zweiten 3/2-Wegeventil 24 der Tankrücklaufanschluss T_{R} und der Pumpdruckanschluss P_{D} miteinander verbunden, und der Arbeitsanschluss D ist gesperrt.

Der Tanksauganschluss T_{S} ist mit einem Tank 40 verbunden, derart, dass über den Tanksauganschluss T_{S} Fluid (Harnstoff) aus dem Tank 40 angesaugt werden kann. Eine Saugseite einer Pumpe 42 ist mit dem Pumpsauganschluss P_{S} verbunden. Eine Druckseite der Pumpe 42 ist mit einem optionalen Filter 44 verbunden und ferner mit dem Pumpdruckanschluss P_{D}. Die Arbeitsanschlüsse D des ersten und des zweiten 3/2-Wegeventils 22, 24 sind miteinander und mit einem Harnstoffeinspritzsystem 46 verbunden, mittels dessen Harnstoff in die Abgasanlage 12 eingespritzt werden kann.

Der Pumpdruckanschluss P_{D} ist ferner mit einer Drossel 48 verbunden, deren anderer Anschluss mit dem Tankrücklaufanschluss T_{R} verbunden ist. Der Tankrücklaufanschluss T_{R} mündet drucklos in den Tank.

Die Funktionsweise des Harnstoffeinspritzsystems 46 ist folgendermaßen. In einer Ruheposition, bei der die Aktoreinrichtung 30 nicht angesteuert ist, befinden sich die Wegeventile 22, 24 in der zweiten Schaltstellung B (Fig. 2). In dieser Schaltstellung ist das Harnstoffeinspritzsystem 46 entleert. Der Harnstoff befindet sich in dem Tank 40. Bei Start des Fahrzeugs 14 wird die Aktoreinrichtung 30 angesteuert, um die Wegeventile 22, 24 in die erste Schaltstellung A zu versetzen. In dieser Schaltstellung wird ferner die Pumpe 42 in Betrieb gesetzt, so dass die Pumpe 42 aus dem Tank 40 Harnstoff über den Tanksauganschluss T_{S} und den Pumpsauganschluss P_{S} ansaugt und an den Pumpdruckanschluss P_{D} abgibt, über den das unter Druck stehende Fluid an den Arbeitsanschluss D und folglich zu dem Harnstoffeinspritzsystem 46 geleitet wird.

Bei Abstellen des Fahrzeugs wird das Harnstoffeinspritzsystem 46 entleert. Hierzu wird die Aktoreinrichtung 30 deaktiviert, so dass die Rückstellfedern 32, 34 die Schaltstellung B einrichten. Die Pumpe 42 bleibt hierbei noch für die Zeit des Absaugvorgangs in Betrieb, so dass Harnstoff aus dem Harnstoffeinspritzsystem 46 über den Arbeitsanschluss D des ersten 3/2-Wegeventils 22 und den Pumpsauganschluss P_{S} von der Pumpe 42 angesaugt wird. Die Druckseite der Pumpe 42 ist über den Pumpdruckanschluss P_{D} und den Tankrücklaufanschluss T_{R} mit dem Tank 40 verbunden, um den abgesaugten Harnstoff in den Tank 40 zu befördern. Nach dem Erreichen der zweiten Schaltstellung B wird die Pumpe 42 also wiederum angetrieben, um das Harnstoffeinspritzsystem 46 zu entleeren. Sobald dieses entleert ist, wird auch die Pumpe 42 abgeschaltet.

Generell wäre es bei dieser Ausführungsform notwendig, während des Einrichtens der Schaltstellung A die Aktoreinrichtung 30 ständig mit Energie zu versorgen. Um dies zu vermeiden, ist eine fluidische Selbsthalteeinrichtung 50 vorgesehen, die in den Fig. 1 und 2 schematisch dargestellt ist. Die fluidische Selbsthalteeinrichtung 50 ist mit dem Arbeitsanschluss D verbunden. Sobald die Aktoreinrichtung 30 die Schaltstellung A eingerichtet hat, wird die fluidische Selbsthalteeinrichtung 50 folglich mit Fluid unter Druck versorgt und richtet eine Selbsthaltung der 3/2-Wegeventile 22, 24 in der ersten Schaltstellung A ein, solange die Pumpe 42 in dieser Schaltstellung im Betrieb ist.

Folglich kann die Aktoreinrichtung 30 nach dem Einrichten der ersten Schaltstellung A relativ bald wieder abgeschaltet werden, so dass zum Einrichten der Schaltstellung A lediglich noch die Pumpe 42 betrieben werden muss. Die Selbsthalteeinrichtung 50 kann die Aktoreinrichtung 30 beim Einrichten der ersten Schaltstellung A auch unterstützen, so dass die Aktoreinrichtung 30 klein dimensioniert werden kann.

Um aus der ersten Schaltstellung A, die mittels der Selbsthaltung gehalten wird, wieder in die zweite Schaltstellung B zu gelangen, wird die Pumpe 42 so angesteuert, dass die von der fluidischen Selbsthalteeinrichtung 50 ausgeübte Selbsthaltekraft kleiner wird, bis die Kraft der Rückstellfedern 32, 34 die von der Selbsthalteeinrichtung 50 aufgebrachte Kraft übersteigt. Hierbei wirkt unterstützend die Drossel 48, über die in der ersten Schaltstellung A das Fluid zum Tank 40 zurückströmen kann, um auf diese Weise das Lösen der Selbsthaltung zu unterstützen bzw. zu ermöglichen.

In der zweiten Schaltstellung B ist eine Ansaugöffnung des Tanks 14 mit dem in dem ersten 3/2-Wegeventil 22 abgesperrten Tanksauganschluss T_{S} verbunden, so dass ausgeschlossen werden kann, dass Fluid in der zweiten Schaltstellung B in den Fluidkreislauf gelangt.

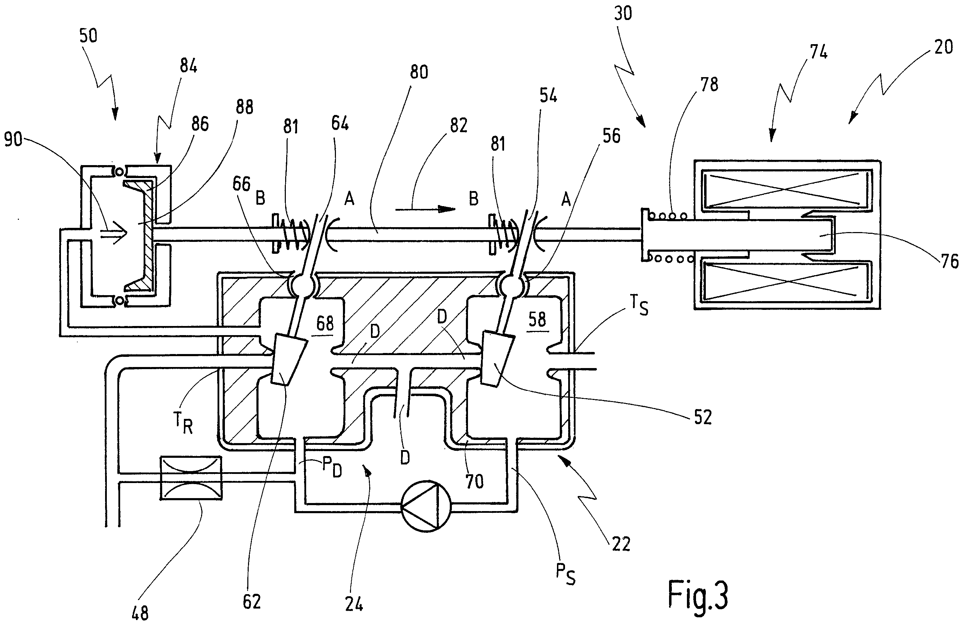

In Fig. 3 ist eine erste Ausführungsform einer Ventilanordnung 20 dargestellt, die die unter Bezugnahme auf die Fig. 1 und 2 beschriebenen Funktionen realisieren kann. Gleiche Elemente sind daher mit gleichen Bezugszeichen versehen. Im Folgenden werden im Wesentlichen die konstruktiven Details bzw. Unterschiede erläutert.

Die Wegeventileinrichtung 20 der Fig. 3 ist als hebelbetätigtes Klappenventil ausgebildet. Hierzu weist die Wegeventileinrichtung 20 eine erste Klappe 52 auf, die an einem ersten Hebel 54 festgelegt ist. Der erste Hebel 54 ist an einem ersten Hebellager 56 gelagert und erstreckt sich aus einem Gehäuse der Wegeventileinrichtung 20 heraus. Die erste Klappe 52 ist in einer ersten Ventilkammer 58 zwischen einem Arbeitsanschluss D und einem Tanksauganschluss T_{S} verschwenkbar, um diese alternativ abzudichten. Die erste Ventilkammer 58 ist ferner ständig mit dem Pumpsauganschluss P_{S} verbunden, der mit der Pumpe 42 verbunden ist.

Die Wegeventileinrichtung 20 weist ferner eine zweite Klappe 62 auf, die an einem zweiten Hebel 64 festgelegt ist. Der zweite Hebel 64 ist an einem zweiten Hebellager 66 verschwenkbar gelagert. Die zweite Klappe 62 ist innerhalb einer zweiten Ventilkammer 68 zwischen einem Tankrücklaufanschluss T_{R} und einem Arbeitsanschluss D verschwenkbar, um diese alternativ abzudichten bzw. zu verschließen. Die zweite Ventilkammer 68 ist ferner ständig mit dem Pumpdruckanschluss P_{D} verbunden, der mit der Druckseite der Pumpe 42 verbunden ist.

Die erste und die zweite Ventilkammer 58, 68 sind in einem Ventilgehäuse angeordnet, das vorzugsweise aus Kunststoff hergestellt ist. Das erste und das zweite Hebellager 56, 66 dienen vorzugsweise auch der Abdichtung, und können beispielsweise aus einem Elastomer hergestellt sein. Die erste und die zweite Klappe 52, 62, die jeweils ein Absperrorgan bilden, können ebenfalls Absperrflächen aus einem Elastomer aufweisen, um die jeweiligen Anschlüsse abzudichten.

Innerhalb des Ventilgehäuses 70 sind die Arbeitsanschlüsse D der ersten Ventilkammer 58 und der zweiten Ventilkammer 68 miteinander sowie mit dem Arbeitsanschluss D an dem Ventilgehäuse 70 verbunden.

Die Aktoreinrichtung 30 beinhaltet bei dieser Ausführungsform einen Elektromagneten 74, mittels dessen ein Anker 76 linear verschiebbar ist. Die Verschieberichtung ist generell parallel zu einer Längsachse ausgerichtet, die das erste und das zweite Hebellager 56, 66 miteinander verbindet. Der Anker 76 ist über eine Rückstellfeder 78 in die zweite Schaltstellung B vorgespannt. Die Rückstellfeder 78 entspricht der Funktion der Rückstellfedern 32, 34 der Fig. 1 und 2.

Der Anker 76 ist ferner mit einer sich linear erstreckenden Aktorstange 80 formschlüssig verbunden. Sich aus dem Ventilgehäuse 70 heraus erstreckende Enden des ersten und des zweiten Hebels 54, 64 sind an axial unterschiedlichen Stellen gelenkig an der Aktorstange 80 angelenkt. Dabei sind Andruckfedern 81 vorgesehen, die zwischen der Aktorstange 80 und den Hebeln 54, 64 angreifen und dafür sorgen, dass die Hebel 54, 64 zumindest in der ersten Schaltstellung A kraftgesteuert an den Arbeitsanschluss D bzw. den Tankrücklaufanschluss T_{R} angedrückt werden. Da in den Ventilkammern 58, 68 unabhängig von der Schaltstellung unterschiedliche Drücke herrschen, kann durch Einstellung der Federkonstanten bzw. Federwege der Andruckfedern 81 dafür gesorgt werden, dass diese jeweils mit einer geeigneten Kraft an ihre jeweiligen Anschlüsse in der ersten Schaltstellung A angedrückt werden. Bei der Ventilklappe 52 ist beispielsweise zu beachten, dass in der gezeigten Schaltstellung A ein relativ großer Druck aus der zweiten Ventilkammer 68 auf die Dichtseite der ersten Klappe 52 wirkt, so dass die dem ersten Hebel 54 zugeordnete Andruckfeder 81 entsprechend stark dimensioniert sein sollte. Die auf den zweiten Hebel 64 wirkende Andruckfeder 81 kann hingegen kleiner dimensioniert sein, da auf die zweite Klappe 62 abdichtseitig kein Druck wirkt.

In Fig. 3 ist ferner bei 82 die Anzugsrichtung des Elektromagneten 74 gezeigt, mittels dessen der Anker 76 gegen die Kraft der Rückstellfeder 78 in die erste Schaltstellung A angezogen werden kann.

Zur Realisierung der fluidischen Selbsthalteeinrichtung 50 ist ein Selbsthaltezylinder 84 vorgesehen, der koaxial zu der Aktorstange 80 angeordnet ist. In dem Selbsthaltezylinder 84 ist ein Selbsthaltekolben 86 axial verschieblich gelagert, der mit der Aktorstange 80 verbunden ist. Eine der Aktorstange 80 gegenüberliegende, nicht näher bezeichnete Kammer des Selbsthaltezylinders 84 ist mit der zweiten Ventilkammer 68 verbunden. Wenn daher in der in Fig. 3 gezeigten ersten Schaltstellung A in der zweiten Ventilkammer 68 Fluid unter Druck bereitgestellt wird, wird dies auch in den Selbsthaltezylinder 84 gefördert und drückt dabei den Selbsthaltekolben 86 in Anzugsrichtung 82. Durch Wahl einer geeigneten Fläche des Selbsthaltekolbens 86 kann die hierbei von der Selbsthalteeinrichtung 50 ausgeübte Selbsthaltekraft 90 größer sein als die Kraft der Rückstellfeder 78, so dass in der ersten Schaltstellung A nach Einrichtung der Selbsthaltung der Elektromagnet 74 nicht mehr mit Energie versorgt werden muss.

In Fig. 3 ist ferner gezeigt, dass die Kammer des Selbsthaltezylinders 84 mittels einer beweglichen Membran 88 abgedichtet ist, so dass das Fluid nicht in den Bereich der Kolbenführung oder in den Austrittsbereich der Aktorstange 80 gelangen kann.

Das Gehäuse 70 sowie der Selbsthaltezylinder 84 können vorzugsweise aus Kunststoff hergestellt sein, der gegenüber dem relativ aggressiven Harnstoff weitgehend inert ist.

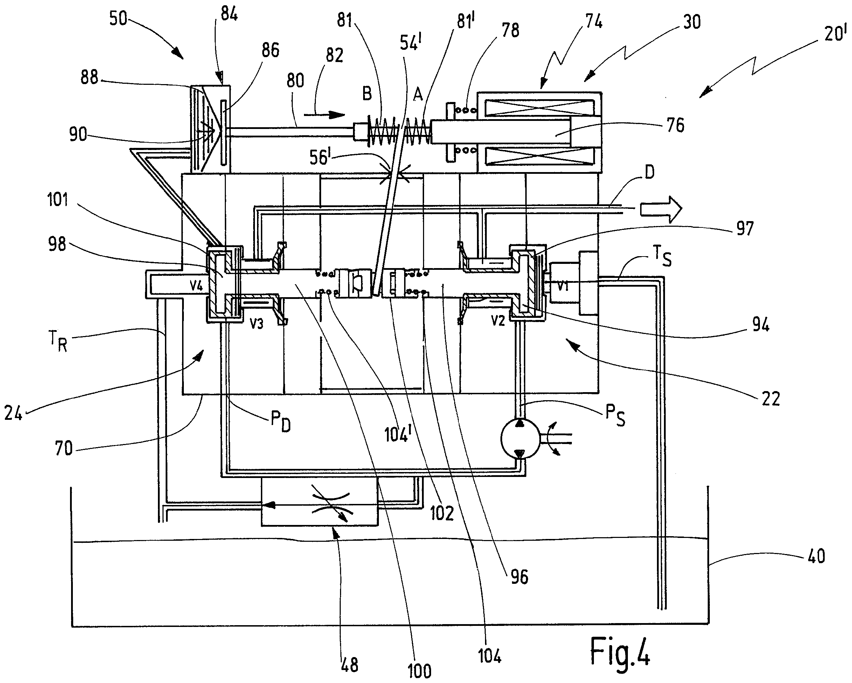

In Fig. 4 ist eine weitere Ausführungsform einer Wegeventileinrichtung 20' gezeigt. Diese entspricht hinsichtlich Aufbau und Funktionsweise generell den zuvor beschriebenen Wegeventileinrichtungen. Gleiche Elemente sind daher mit gleichen Bezugszeichen versehen. Im Folgenden werden im Wesentlichen die Unterschiede erläutert.

Die Wegeventileinrichtung 20' ist nicht als Klappenventil ausgebildet sondern weist zwei axial verschiebliche Absperrorgane in Form von Ventiltellern auf. Genauer gesagt weist das erste 3/2-Wegeventil 22 einen ersten Ventilteller 94 auf, der mit einem Schieber 96 starr verbunden ist. Der erste Schieber 96 ist in dem Gehäuse 70 in Längsrichtung beweglich gelagert, die vorzugsweise parallel ist zu der Erstreckung der Aktorstange 80.

Der erste Schieber 96 ist ferner gegenüber dem Gehäuse 70 mittels einer ersten Membrandichtung 97 abgedichtet. Im Übrigen sind die Anschlüsse des ersten 3/2-Wegeventils 22 die gleichen wie bei der Ausführungsform der Fig. 3.

Das zweite 3/2-Wegeventil 24 weist ein zweites Absperrorgan in Form eines zweiten Ventiltellers 98 auf, der mit einem zweiten Schieber 100 verbunden ist. Der zweite Schieber 100 ist ebenfalls in Längsrichtung verschieblich an dem Gehäuse 70 gelagert, und zwar koaxial und in Längsrichtung versetzt zu dem ersten Schieber 96. Der zweite Schieber 100 ist mittels einer zweiten Membrandichtung 101 gegenüber dem Gehäuse 70 abgedichtet.

Die Anschlüsse des zweiten 3/2-Wegeventils 24 sind die gleichen wie bei der Ausführungsform der Fig. 3.

Die zwei Schieber 96, 100 sind mittels eines Zwischengliedes 102 miteinander gekoppelt. Das Zwischenglied 102 wiederum ist mit einem einzelnen Hebel 54' gekoppelt, der an einem einzelnen Hebellager 56' an dem Gehäuse 70 verschwenkbar gelagert ist. Ein aus dem Gehäuse 70 heraustretender Teil des Hebels 54' ist mit der Aktorstange 80 gelenkig gekoppelt. Der Aufbau der Aktoreinrichtung 30 ist bei dieser Ausführungsform im Grunde identisch zu jener der Ausführungsform der Fig. 3. Es ist lediglich erkennbar, dass der Hebel 54' nicht nur in Anzugsrichtung 82 über eine Andruckfeder 81 mit der Aktorstange 80 gekoppelt ist, sondern mittels einer weiteren Andruckfeder 81' auch in einer Richtung entgegengesetzt zu der Anzugsrichtung 82.

Das Zwischenglied 102 kann ferner mit den Schiebern 96, 100 ebenfalls über Andruckfedern gekoppelt sein, die in Fig. 4 bei 104, 104' dargestellt sind. Dabei ist es vorzugsweise so, dass die Andruckfedern 104, 104' nur einseitig wirken, wohingegen in der anderen Richtung eine im Wesentlichen formschlüssige Kopplung zu dem Zwischenglied 102 und den jeweiligen Schiebern 96, 100 eingerichtet wird. In der dargestellten Schaltstellung A drückt der Hebel 54' das Zwischenglied 102 über die weitere Andruckfeder 104' in axialer Richtung gegen den zweiten Schieber 100, so dass der Tankrücklaufanschluss T_{R} verschlossen ist und der Pumpdruckanschluss P_{D} mit dem Arbeitsanschluss D sowie mit der Selbsthalteeinrichtung 50 gekoppelt ist. Der erste Schieber 96 wird jedoch von dem Zwischenglied 102 formschlüssig in dieser Richtung mitgenommen, so dass der erste Ventilteller 94 mit einem relativ hohen Druck gegen den Arbeitsanschluss D angedrückt werden kann.

In der zweiten Schaltstellung B, die in Fig. 4 nicht dargestellt ist, sind die Verhältnisse genau umgekehrt.

Bei den Ausführungsformen der Fig. 3 und 4 ist die Aktoreinrichtung 30 jeweils parallel versetzt zu einer Längsachse angeordnet, die die Ventilkammern miteinander verbindet.

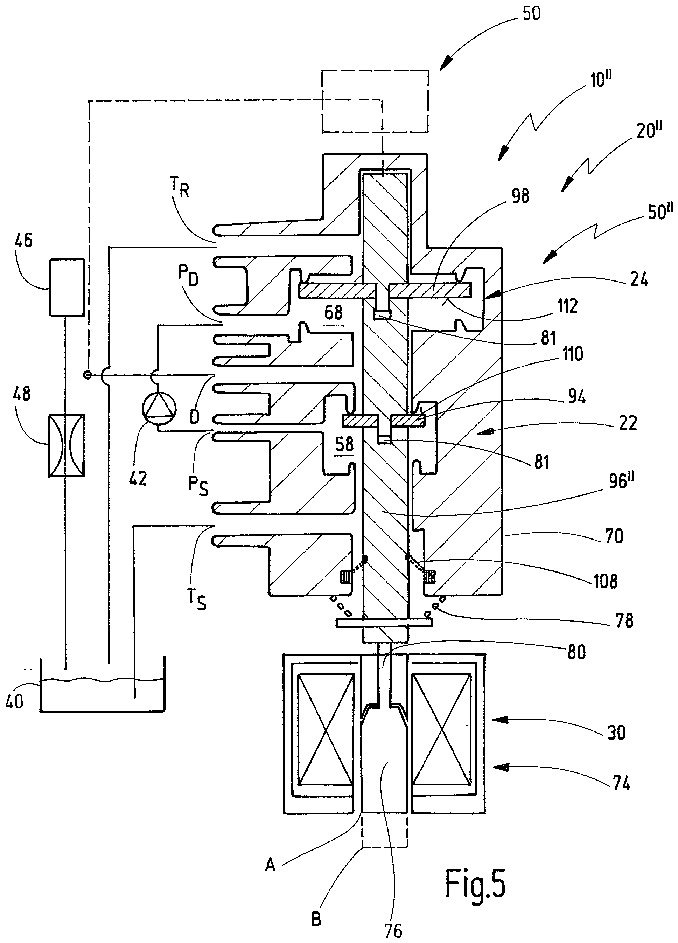

In Fig. 5 ist eine weitere Ausführungsform einer Wegeventileinrichtung 20" dargestellt, deren genereller Aufbau und Funktionsweise den oben beschriebenen Wegeventileinrichtungen entspricht. Gleiche Elemente sind daher mit gleichen Bezugszeichen gekennzeichnet. Im Folgenden werden im Wesentlichen die Unterschiede erläutert.

Bei der Wegeventileinrichtung 20" der Fig. 5 ist anstelle der zwei Schieber 96, 100 der Fig. 4 nur ein einzelner Schieber 96" vorgesehen. An dem einzelnen Schieber 96" sind ein erstes Absperrorgan in Form eines ersten Ventiltellers 94 und ein zweites Absperrorgan in Form eines zweiten Ventiltellers 98 in axialer Richtung versetzt gelagert. Ein Ende des einzelnen Schiebers 96" erstreckt sich in axialer Richtung aus dem Gehäuse 70 heraus. In diesem Bereich ist der Schieber 96" gegenüber dem Gehäuse 70 durch eine Membrandichtung 108 abgedichtet.

Bei dieser Ausführungsform ist ferner vorgesehen, dass die Aktoreinrichtung 30 koaxial zu dem Schieber 96" angeordnet ist. Mit anderen Worten ist der Anker 76 über eine Aktorstange 80 koaxial mit dem Schieber 96" verbunden.

Der Schieber 96 ist in dem Gehäuse 70 so geführt, dass zwischen seinem Außenumfang und entsprechenden Führungsabschnitten des Gehäuses 70 ein relativ großer Spalt vorhanden ist, so dass vermieden wird, dass Harnstoffkristalle die Funktion beeinträchtigen.

In Fig. 5 ist zu erkennen, dass eine fluidische Selbsthalteeinrichtung 50 ebenfalls vorgesehen sein kann. In diesem Fall kann ein nicht dargestellter Selbsthaltekolben 86 auf der der Aktoreinrichtung 30 gegenüberliegenden Seite mit dem Schieber 96" verbunden sein.

Bei der Ausführungsform der Fig. 5 ist ferner von Bedeutung, dass der zweite Ventilteller 98 eine Fläche 112 aufweist, die wesentlich größer ist als eine Fläche 110 des ersten Ventiltellers 94.

Da zudem in der zweiten Ventilkammer 68 generell ein höherer Druck herrscht, ist es möglich, allein durch die Flächendifferenz zwischen der ersten Fläche 110 und der zweiten Fläche 112 eine in die Wegeventileinrichtung 20" integrierte fluidische Selbsthalteeinrichtung 50" vorzusehen. Diese kann alternativ oder zusätzlich zu der Selbsthalteeinrichtung 50 vorgesehen sein.

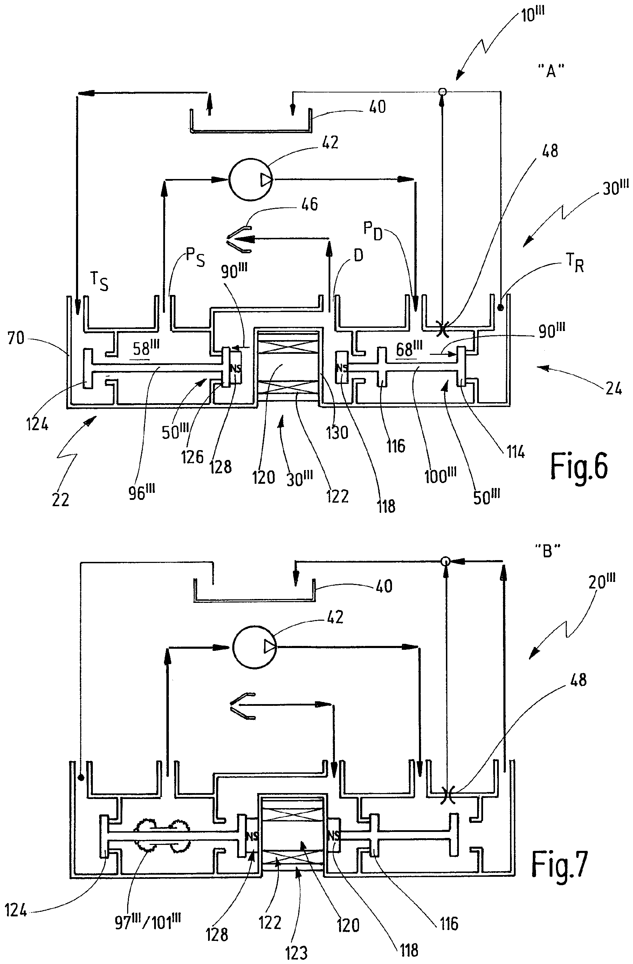

In den Fig. 6 und 7 ist eine weitere Ausführungsform einer Wegeventileinrichtung 20'" dargestellt, deren genereller Aufbau und Funktionsweise den oben beschriebenen Wegeventileinrichtungen entspricht. Gleiche Elemente sind daher mit gleichen Bezugsziffern gekennzeichnet. Im Folgenden werden im Wesentlichen die Unterschiede erläutert.

Bei der Wegeventileinrichtung 20'" der Fig. 6 und 7 sind in einem Gehäuse 70 ein erster Schieber 96'" des ersten 3/2-Wegeventils 22 und ein zweiter Schieber 100'" des zweiten 3/2-Wegeventils 24 koaxial zueinander angeordnet. Der zweite Schieber 100'" weist einen ersten Ventilteller 114 sowie einen zweiten Ventilteller 116 auf. Die zwei Ventilteller 114, 116 sind in einer zweiten Ventilkammer 68'" angeordnet. Der erste Ventilteller 114 ist dazu ausgelegt, den Tankrücklaufanschluss T_{R} entweder abzudichten oder freizugeben. Der zweite Ventilteller 116 ist dazu ausgelegt, den Arbeitsanschluss D entweder abzudichten oder freizugeben. Der Arbeitsanschluss D und der Tankrücklaufanschluss T_{R} liegen in axialer Richtung gegenüber, so dass der Schieber 100'" zwischen zwei Endstellungen bewegbar ist, in denen entweder der Arbeitsanschluss D oder der Tankrücklaufanschluss T_{R} abgedichtet ist. Die zweite Ventilkammer 68'" ist mit dem Pumpdruckanschluss P_{D} verbunden, so dass innerhalb der zweiten Ventilkammer 68"' immer ein relativ hoher Druck herrscht.

Der erste Schieber 96'" weist einen dritten Ventilteller 124 sowie einen vierten Ventilteller 126 auf. Der dritte Ventilteller 124 ist dazu ausgelegt, den Tanksauganschluss T_{S} abzudichten. Der vierte Ventilteller 126 ist dazu ausgelegt, den Arbeitsanschluss D abzudichten.

Während der erste und der zweite Ventilteller 114, 116 innerhalb der zweiten Ventilkammer 68'" angeordnet sind, befinden sich der dritte und der vierte Ventilteller 124, 126 jeweils außerhalb der ersten Ventilkammer 58"', die mit dem Pumpsauganschluss P_{S} verbunden ist und in der generell ein relativ niedriger Druck herrscht.

In axialer Richtung zwischen den zwei Schiebern 96"', 100'" ist eine Spule 122 angeordnet, in der ein weichmagnetischer Kern 120 aufgenommen ist. Der weichmagnetische Kern 120 ist dabei in axialer Richtung zwischen den zwei Schiebern 96"', 100'" angeordnet.

Die Spule 122 mit dem weichmagnetischen Kern 120 ist vorzugsweise in einer Gehäuseausbuchtung 130 angeordnet, die sich zwischen den beiden Schiebern 96"', 100'" erstreckt.

An dem zweiten Schieber 100'" ist vorzugsweise ein erster Permanentmagnet 118 festgelegt, und zwar auf der der Spule 122 zugewandten Seite. In entsprechender Weise ist vorzugsweise an dem ersten Schieber 96'" ein zweiter Permanentmagnet 128 festgelegt, und zwar auf der der Spule 122 zugewandten Seite.

Die Permanentmagnete 118, 128 sind vorzugsweise axial magnetisiert. Ein Nordpol des ersten Permanentmagneten 118 weist zu der Spule 122. Ein Südpol des zweiten Permanentmagneten 128 weist zu der Spule 122. Durch Bestromen der Spule 122 wird vorzugsweise ein Magnetfeld eingerichtet, mittels dessen die Permanentmagnete 118, 128 jeweils von der Spule 122 axial weg gedrückt werden. Hierdurch verschließt der vierte Ventilteller 126 von außen den Arbeitsanschluss D hin zu der ersten Ventilkammer 58"'. Ferner verschließt hierdurch der erste Ventilteller 114 den Tankrücklaufanschluss T_{R}, und zwar über der zweiten Ventilkammer 68"'.

Der zweite Ventilteller 116 gibt hierdurch vorzugsweise eine Verbindung zwischen dem Pumpdruckanschluss P_{D} und dem Arbeitsanschluss D frei. Ferner sind die Arbeitsanschlüsse D des ersten und des zweiten 3/2-Wegeventils 22, 24 miteinander verbunden, so dass der vierte Ventilteller 126 durch das Fluid mit dem von der Pumpe 42 gelieferten Druck gegenüber der ersten Ventilkammer 58'" drückt bzw. abgedichtet wird, in der der relativ gesehen niedrigere Druck der Saugseite der Pumpe 42 herrscht. In dieser Position gibt der erste Schieber 96'" über den dritten Ventilteller 124 ferner eine Verbindung zwischen dem Tanksauganschluss T_{S} und dem Pumpsauganschluss P_{S} frei.

Da der Ventilteller 114 vorzugsweise mit dem Systemdruck gegen den Tankrücklaufanschluss T_{R} angedrückt wird, kann bei geeigneter Wahl der Größe des ersten Ventiltellers 114 eine Selbsthaltung eingerichtet werden. In entsprechender Weise kann bei geeigneter Wahl des vierten Ventiltellers 126 vorzugsweise eine Selbsthaltung des ersten Schiebers 96'" in der ersten Schaltstellung A eingerichtet werden, so dass dann, wenn die Pumpe 42 einen hinreichenden Druck liefert, die Spule 122 abgeschaltet werden kann, während die Wegeventileinrichtung 20'" in der Schaltstellung A verbleibt.

Durch die oben bezeichneten Maßnahmen können folglich fluidische Selbsthalteeinrichtungen 50'" eingerichtet werden, wie sie in Fig. 6 dargestellt sind.

Die zweite Ventilkammer 68'" ist ferner vorzugsweise über die Drossel 48 mit dem Tank 40 verbunden.

Zum Einrichten der zweiten Schaltstellung B, wie sie in Fig. 7 gezeigt ist, wird die Pumpe 42 heruntergeregelt, so dass der Druck in der zweiten Ventilkammer 68"' sich verringert. Mit Unterstützung über die Drossel 48 verringert sich die Selbsthaltekraft 90'" folglich vorzugsweise auf ein Niveau, das geringer ist als die magnetischen Anziehungskräfte der Permanentmagnete 118, 128, deren entgegengesetzte Pole sich über den weichmagnetischen Kern 120 anziehen. Hierdurch wird in dem ersten 3/2-Wegeventil 22 der Tanksauganschluss T_{S} vorzugsweise mittels des dritten Ventiltellers 124 verschlossen, und die Verbindung zwischen dem Arbeitsanschluss D des ersten 3/2-Wegeventils 22 und der ersten Ventilkammer 58'" wird vorzugsweise freigegeben. In entsprechender Weise wird in dem zweiten 3/2-Wegeventil 24 der Tankrücklaufanschluss T_{R} geöffnet und der Arbeitsanschluss D geschlossen, so dass Fluid aus dem Harnstoffeinspritzsystem 46 zum Tank 40 hin abgesaugt werden kann.

In Fig. 7 ist ferner gezeigt, dass die Spule 122 in einer Hülse 123 aufgenommen sein kann, die von außen in die Gehäuseausbuchtung 130 eingesetzt ist. Das Gehäuse 70 ist bei dieser Ausführungsform vorzugsweise aus Kunststoff, kann jedoch im Bereich des weichmagnetischen Kerns 120 auch weichmagnetische Abschnitte aufweisen.

In Fig. 7 ist ferner gezeigt, dass die Schieber 96"', 100'" gegebenenfalls innerhalb der Ventilkammern 58'", 68'" geführt werden, und in diesem Fall durch geeignete Membrandichtungen 97"'/101"' abgedichtet werden können.

Durch die unabhängig voneinander gelagerten Schieber 96"', 100'" können sich reduzierte Schaltkräfte durch optimierte Ausnutzung der Systemdrücke ergeben. Ferner kann die Toleranzabhängigkeit der Dichtbereiche deutlich minimiert werden, insbesondere im Vergleich zu einem einzelnen Schieber 96".

Bei der Wegeventileinrichtung 20'" der Fig. 6 und 7 wirkt der Systemdruck jeweils dichtunterstützend und erzeugt selbsthaltende Ventilteller.

Die Abdichtung kann wesentlich vereinfacht werden, da die Aktoreinrichtung 30'" in Form der Spule 122 außerhalb des Gehäuses, jedoch innerhalb der Gehäuseausbuchtung 130 angeordnet sein kann.

Die Schaltkräfte, die von der Spule 122 ausgeübt werden müssen, um die erste Schaltstellung A einzurichten, können vorzugsweise durch Nutzung der Systemdrücke reduziert werden. Durch die Drossel 48 sind vorzugsweise eine Entspannung und eine Entlüftung realisierbar.

Eine ventilinterne Selbsthaltung kann bei allen vorangegangenen Ausführungsformen relativ leicht eingerichtet werden, da der Druck in der zweiten Ventilkammer 68 generell höher ist als in der ersten Ventilkammer 58. Bei den oben beschriebenen Klappenventilen kann ferner eine Reduzierung der Drehmomente in den Hebelgelenken erreicht werden, da die Systemdrücke zum Abdichten ausgenutzt werden können.

## Patentansprüche

1. Ventilanordnung für aggressive Fluide, insbesondere für Harnstoff, mit einer Wegeventileinrichtung (20), die eine erste und eine zweite Schaltstellung (A, B) aufweist, und einer Aktoreinrichtung (30) zur Betätigung der Wegeventileinrichtung (20), wobei die Wegeventileinrichtung (20) wenigstens einen Tankanschluss (T_{S}, T_{R}) zur Verbindung mit einem Tank (40), wenigstens einen Pumpanschluss (P_{S}, P_{D}) zur Verbindung mit einer Pumpe (42) sowie einen Arbeitsanschluss (D) aufweist, wobei die Wegeventileinrichtung (20) nach dem Versetzen in die erste Schaltstellung (A) mittels der Aktoreinrichtung (30) durch eine mit der Aktoreinrichtung (30) verbundene fluidische Selbsthalteeinrichtung (50) in der ersten Schaltstellung (A) gehalten wird,
**dadurch gekennzeichnet, dass**
die Wegeventileinrichtung (20) in die zweite Schaltstellung (B) vorgespannt ist, wobei die Selbsthalteeinrichtung (50) in der ersten Schaltstellung (A) über eine Drossel (48) mit einem Tankrücklaufanschluss verbunden ist und wobei die Selbsthalteeinrichtung (50) in der ersten Schaltstellung (A) mit dem Arbeitsanschluss (D) verbunden ist.

2. Ventilanordnung nach Anspruch 1, **dadurch gekennzeichnet, dass** die Selbsthalteeinrichtung (50") in die Wegeventileinrichtung (20) integriert ist.

3. Ventilanordnung nach einem der Ansprüche 1 oder 2, **dadurch gekennzeichnet, dass** die Wegeventileinrichtung (20) zwei Ventilkammern (58, 68) aufweist, in denen jeweils ein Absperrorgan (52, 62) beweglich gelagert ist und die jeweils mit wenigstens einem Anschluss der Wegeventileinrichtung (20) verbunden sind, wobei die Anschlüsse so gewählt sind, dass in einer (68) der Ventilkammern (58, 68) unabhängig von der Schaltstellung (A, B) ein höherer Druck vorherrscht als in der anderen Ventilkammer (58).

4. Ventilanordnung nach einem der Ansprüche 1 bis 3, **dadurch gekennzeichnet, dass** die Wegeventileinrichtung (20) durch zwei 3/2-Wegeventile (22, 24) gebildet ist, deren Arbeitsanschlüsse (D) miteinander verbunden sind.

5. Ventilanordnung nach einem der Ansprüche 1 bis 4, **dadurch gekennzeichnet, dass** die Wegeventileinrichtung (20'; 20") wenigstens einen Ventilteller (94, 98) aufweist, der mittels eines axial verschieblichen Schiebers (96, 100; 96') betätigbar ist.

6. Ventilanordnung nach Anspruch 5, **dadurch gekennzeichnet, dass** die Wegeventileinrichtung (20') zwei Schieber (96, 100) aufweist.

7. Ventilanordnung nach Anspruch 6, **dadurch gekennzeichnet, dass** die zwei Schieber (96, 100) koaxial angeordnet sind.

8. Ventilanordnung nach Anspruch 7, **dadurch gekennzeichnet, dass** die Aktoreinrichtung (30"') eine Spule (122) aufweist, die zwischen den Schiebern (96"', 100"') angeordnet ist.

9. Ventilanordnung nach einem der Ansprüche 6 bis 8, **dadurch gekennzeichnet, dass** an wenigstens einem der Schieber (96"', 100"') ein Permanentmagnet (118, 128) festgelegt ist.

10. Ventilanordnung nach einem der Ansprüche 6 bis 9, **dadurch gekennzeichnet, dass** an jedem Schieber (96"', 100"') zwei Ventilteller (114/116), 124, 126) festgelegt sind.

11. Harnstoffeinspritzsystem (10) für Kraftfahrzeuge (14), mit einem Einspritzsystem (46), das mit einem Arbeitsanschluss (D) einer Ventilanordnung nach einem der Ansprüche 1 bis 10 verbunden ist.

12. Verfahren zum Ansteuern einer Ventilanordnung für Harnstoffeinspritzsysteme (10), insbesondere einer Ventilanordnung nach einem der Ansprüche 1 bis 10, mit den Schritten:
- Betätigen einer Aktoreinrichtung (30), um eine Wegeventileinrichtung (20) der Ventilanordnung aus einer zweiten (B) in eine erste (A) Schaltstellung zu versetzen;
- wobei die Wegeventileinrichtung (20) in der ersten Schaltstellung (A) mittels einer fluidischen Selbsthalteeinrichtung (50) gehalten wird, die in der ersten Schaltstellung (A) mit einem Arbeitsanschluss (D) verbunden ist, der mit der Druckseite einer Fluidversorgungseinrichtung (42) verbunden ist, wobei die Selbsthalteeinrichtung (50) in der ersten Schaltstellung (A) über eine Drossel (48) mit einem Tankrücklaufanschluss verbunden ist und
- Deaktivieren der Aktoreinrichtung (30).

13. Verfahren nach Anspruch 12, wobei die Fluidversorgungseinrichtung (42) zum Versetzen der Wegeventileinrichtung (20) zurück in die zweite Schaltstellung (B) deaktiviert wird, wobei sich die Selbsthalteeinrichtung (50) über eine in dieser Schaltstellung mit dem Arbeitsanschluss (D) verbundene Drossel (48) zum Tank (40) hin entleert, bis die Wirkung der Selbsthaltung geringer ist als die Wirkung einer Rückstelleinrichtung (78; 118, 128), die die Aktoreinrichtung (30) in die zweite Schaltstellung (B) vorspannt.

## Claims

1. Valve arrangement for aggressive fluids, in particular for urea, comprising a directional control valve device (20) which has a first and a second shift position (A, B), and an actuator device (30) for actuating the directional control valve device (20), wherein the directional control valve device (20) comprises at least one reservoir connection (T_{S}, T_{R}) for connection to a reservoir (40), at least one pump connection (P_{S}, P_{D}), for connection to a pump (42), as well as a working connection (D), wherein the directional control valve device (20), after displacement into the first shift position (B) is held via the actuator device (30) by means of a fluidic self-holding device (50) which is connected to the actuator device (30),
**characterized in that**
the directional control valve device (20) is biased into the second shift position (B), wherein the self-holding device (50) is, in the first shift position (A), connected via a throttle (48) with a reservoir return connection, and wherein the self-holding device (50), in the first shift position (A), is connected to the working connection (D).

2. Valve arrangement according to claim 1, **characterized in that** the self-holding device (50") is integrated into the directional control valve device (20).

3. Valve arrangement according to any of claims 1 or 2, **characterized in that** the directional control valve device (20) includes two valve chambers (48, 68), wherein a respective shut-off element (52, 62) is movably supported in each of the valve chambers (58, 68), wherein the valve chambers (58, 68) are in each case connected to at least a connection of the directional control valve device (20), wherein the connections are chosen such that, independent of the shift position (A, B), a higher pressure prevails in one (68) of the valve chambers (58, 68) than in the other valve chamber (58).

4. Valve arrangement according to any of claims 1 to 3, **characterized in that** the directional control valve device (20) is formed by two 3/2-directional valves (22, 24), wherein the working connections (D) of the two 3/2-directional valves (22, 24) are connected to each other.

5. Valve arrangement according to any of claims 1 to 4, **characterized in that** the directional control valve device (20'; 20") comprises at least one valve disc (94, 98), which can be actuated by means of an axially displaceable slider (96, 100; 96').

6. Valve arrangement according to claim 5, **characterized in that** the directional control valve device (20') includes two sliders (96, 100).

7. Valve arrangement according to claim 6, **characterized in that** the two sliders (96, 100) are arranged coaxially with respect to each other.

8. Valve arrangement according to claim 7, **characterized in that** the actuator device (30'") includes a coil (122) which is arranged between the sliders (96"', 100"').

9. Valve arrangement according to any of claims 6 to 8, **characterized in that** a permanent magnet (118, 128) is fixed to at least one of the sliders (96"', 100'").

10. Valve arrangement according to any of claims 6 to 9, **characterized in that** two valve discs (114/116, 124, 126) are attached to each of the sliders (96"', 100"').

11. Urea injection system (10) for motor vehicles (14), including an injection system (46) which is connected to a working connection (D) of a valve arrangement according to any of claims 1 to 10.

12. A method for controlling a valve arrangement for urea injection systems (10) in particular a valve arrangement according to any of claims 1 to 10, including the steps of:
- operating an actuator device (30) in order to displace a directional control valve device (20) of the valve arrangement from a second shift position (D) into a first shift position (A);
- wherein the directional control valve device (20) is held in the first shift position (A) by means of a fluidic self-holding device (50) which is connected in the first shift position (A) to a working connection (D), wherein the working connection (D) is connected with a pressure side of a fluid supply device (42), wherein the self-holding device (50) is connected in the first shift position (A) to a reservoir return connection via a throttle (48), and
- deactivating the actuator device (30).

13. Method according to claim 12, wherein the fluid supply device (42) is deactivated for displacing the directional control valve device (20) back into the second shift position (B), wherein the self-holding device (50) empties itself to the reservoir (40) via a throttle (48) which is connected in this shift position to the working connection (D), until the effect of the self-holding is less than the effect of a restoring device (78; 118, 128) which biases the actuator device (30) into the second shift position (B).

## Revendications

1. Agencement de soupape pour des fluides agressifs, en particulier pour de l'urée, comprenant un dispositif de soupape de distribution (20) qui présente une première et une deuxième position de commutation (A, B), et un dispositif d'actionneur (30) pour actionner le dispositif de soupape de distribution (20), le dispositif de soupape de distribution (20) présentant au moins un raccord de réservoir (T_{S}, T_{R}) pour le raccordement à un réservoir (40), au moins un raccord de pompe (P_{S}, P_{D}) pour le raccordement à une pompe (42), ainsi qu'un raccord de travail (D), le dispositif de soupape de distribution (20), après avoir été déplacé dans la première position de commutation (A), étant maintenu dans la première position de commutation (A) au moyen du dispositif d'actionneur (30) par un dispositif de maintien autonome fluidique (50) raccordé au dispositif d'actionneur (30),
**caractérisé en ce que**
le dispositif de soupape de distribution (20) est précontraint dans la deuxième position de commutation (B), le dispositif de maintien autonome (50) étant raccordé à un raccord de retour au réservoir dans la première position de commutation (A) par le biais d'un étranglement (48) et le dispositif de maintien autonome (50) étant raccordé au raccord de travail (D) dans la première position de commutation (A).

2. Agencement de soupape selon la revendication 1, **caractérisé en ce que** le dispositif de maintien autonome (50") est intégré dans le dispositif de soupape de distribution (20).

3. Agencement de soupape selon l'une quelconque des revendications 1 ou 2, **caractérisé en ce que** le dispositif de soupape de distribution (20) présente deux chambres de soupape (58, 68), dans lesquelles est à chaque fois supporté de manière déplaçable un organe d'arrêt (52, 62), les organes d'arrêt étant chacun raccordés à au moins un raccord du dispositif de soupape de distribution (20), les raccords étant sélectionnés de telle sorte que dans l'une (68) des chambres de soupape (58, 68), indépendamment de la position de commutation (A, B), règne une pression plus élevée que dans l'autre chambre de soupape (58).

4. Agencement de soupape selon l'une quelconque des revendications 1 à 3, **caractérisé en ce que** le dispositif de soupape de distribution (20) est formé par deux soupapes de distribution à 3/2 voies (22, 24), dont les raccords de travail (D) sont raccordés l'un à l'autre.

5. Agencement de soupape selon l'une quelconque des revendications 1 à 4, **caractérisé en ce que** le dispositif de soupape de distribution (20' ; 20") présente au moins un plateau de soupape (94, 98) qui peut être actionné au moyen d'un coulisseau (96, 100 ; 96') déplaçable axialement.

6. Agencement de soupape selon la revendication 5, **caractérisé en ce que** le dispositif de soupape de distribution (20') présente deux coulisseaux (96, 100).

7. Agencement de soupape selon la revendication 6, **caractérisé en ce que** les deux coulisseaux (96, 100) sont disposés coaxialement.

8. Agencement de soupape selon la revendication 7, **caractérisé en ce que** le dispositif d'actionneur (30"') présente une bobine (122) qui est disposée entre les coulisseaux (96"', 100"').

9. Agencement de soupape selon l'une quelconque des revendications 6 à 8, **caractérisé en ce qu'**un aimant permanent (118, 128) est fixé au niveau d'au moins l'un des coulisseaux (96"', 100"').

10. Agencement de soupape selon l'une quelconque des revendications 6 à 9, **caractérisé en ce que** deux plateaux de soupape (114/116, 124, 126) sont fixés sur chaque coulisseau (96"', 100'").

11. Système d'injection d'urée (10) pour des véhicules automobiles (14), comprenant un système d'injection (46) qui est raccordé à un raccord de travail (D) d'un agencement de soupape selon l'une quelconque des revendications 1 à 10.

12. Procédé de commande d'un agencement de soupape pour des systèmes d'injection d'urée (10), en particulier d'un agencement de soupape selon l'une quelconque des revendications 1 à 10, comprenant les étapes suivantes :
- actionnement d'un dispositif d'actionneur (30) afin de déplacer un dispositif de soupape de distribution (20) de l'agencement de soupape d'une deuxième (B) dans une première (A) position de commutation ;
- le dispositif de soupape de distribution (20) étant maintenu dans la première position de commutation (A) au moyen d'un dispositif de maintien autonome fluidique (50) qui est raccordé à un raccord de travail (D) dans la première position de commutation (A), lequel raccord de travail est raccordé au côté de pression d'un dispositif d'alimentation en fluide (42), le dispositif de maintien autonome (50) étant raccordé à un raccord de retour au réservoir dans la première position de commutation (A) par le biais d'un étranglement (48) et
- désactivation du dispositif d'actionneur (30).

13. Procédé selon la revendication 12, dans lequel le dispositif d'alimentation en fluide (42) est désactivé pour ramener à nouveau le dispositif de soupape de distribution (20) dans la deuxième position de commutation (B), le dispositif de maintien autonome (50) se vidant dans le réservoir (40) par le biais d'un étranglement (48) raccordé dans cette position de commutation au raccord de travail (D) jusqu'à ce que l'effet du maintien autonome soit inférieur à l'effet d'un dispositif de rappel (78 ; 118, 128) qui précontraint le dispositif d'actionneur (30) dans la deuxième position de commutation (B).
